(19) Europäisches Patentamt
European Patent Office
Office européen des brevets

(11) **EP 2 408 555 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(51) Int Cl.:
***B01J 23/12*** *(2006.01)*    ***B01J 35/10*** *(2006.01)*
***C01B 7/04*** *(2006.01)*

(21) Anmeldenummer: **10715089.8**

(22) Anmeldetag: **09.03.2010**

(86) Internationale Anmeldenummer:
**PCT/EP2010/001443**

(87) Internationale Veröffentlichungsnummer:
**WO 2010/105751 (23.09.2010 Gazette 2010/38)**

(54) **URANKATALYSATOR AUF TRÄGER BESONDERER PORENGRÖSSENVERTEILUNG UND VERFAHREN ZU DESSEN HERSTELLUNG, SOWIE DESSEN VERWENDUNG**

URANIUM CATALYST ON A SUBSTRATE HAVING A SPECIFIC PORE SIZE DISTRIBUTION, METHOD FOR THE PRODUCTION THEREOF AND USE THEREOF

CATALYSEUR SUPPORTÉ À BASE D'URANIUM, AYANT UNE DISTRIBUTION PARTICULIÈRE DE LA TAILLE DES PORES, ET SON PROCÉDÉ DE FABRICATION, AINSI QUE SON UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.03.2009 DE 102009013905**

(43) Veröffentlichungstag der Anmeldung:
**25.01.2012 Patentblatt 2012/04**

(73) Patentinhaber: **Bayer Intellectual Property GmbH**
**40789 Monheim (DE)**

(72) Erfinder:
• **WOLF, Aurel**
  **42489 Wülfrath (DE)**
• **MLECZKO, Leslaw**
  **41542 Dormagen (DE)**
• **SCHLÜTER, Oliver, Felix-Karl**
  **51381 Leverkusen (DE)**
• **SCHUBERT, Stephan**
  **League City**
  **TX 77573 (US)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A1-2009/010167    DE-B- 1 195 726**
**GB-A- 1 410 961**

**Beschreibung**

Die vorliegende Erfindung betrifft einen neuen Urankatalysator auf einem Träger besonderer Porengrößenverteilung, ein Verfahren zu dessen Herstellung, sowie dessen Verwendung im Zuge von Verfahren zur Herstellung von Chlor aus Chlorwasserstoff.

Nahezu die gesamte technische Produktion von Chlor erfolgt heutzutage durch Elektrolyse wässriger Kochsalzlösungen.

Ein wesentlicher Nachteil solcher Chloralkalielektrolyseverfahren ist jedoch, dass neben dem erwünschten Reaktionsprodukt Chlor auch Natronlauge in großer Menge anfällt. Somit ist die produzierte Menge an Natronlauge direkt mit der Menge an produziertem Chlor gekoppelt. Die Nachfrage nach Natronlauge ist aber nicht an die Nachfrage nach Chlor gekoppelt, so dass insbesondere in der jüngeren Vergangenheit die Verkaufserlöse für dieses Nebenprodukt stark zurückgegangen sind.

Verfahrenstechnisch bedeutet dies, dass in solchen Chloralkalielektrolyseverfahren Energie in einem Produkt gebunden vorliegt, welchem eine Kompensation für den Aufwand für diese Energie nicht in ausreichendem Maße gegenübersteht.

Eine Alternative zu solchen Verfahren bietet das bereits 1868 von "Deacon" entwickelte und nach ihm benannte "Deacon-Verfahren", bei dem Chlor durch heterogen katalytische Oxidation von Chlorwasserstoff unter gleichzeitiger Bildung von Wasser gebildet wird. Der wesentliche Vorteil dieses Verfahrens ist, dass es von der Natronlaugenherstellung entkoppelt ist. Darüber hinaus ist das Vorprodukt Chlorwasserstoff einfach zugänglich; es fällt in großen Mengen beispielsweise bei Phosgenierungsreaktionen, etwa bei der Isocyanat-Herstellung, an, bei denen wiederum das produzierte Chlor über das Zwischenprodukt Phosgen bevorzugt verwendet wird.

Nach dem Stand der Technik werden bevorzugt Katalysatoren umfassend Übergangsmetalle und/oder Edelmetalle für die Umsetzung von Chlorwasserstoff zu Chlor verwendet.

So offenbart etwa die WO 2007 134771, dass Katalysatoren, enthaltend mindestens eines der Elemente Kupfer, Kalium, Natrium, Chrom, Cer, Gold, Bismut, Ruthenium, Rhodium, Platin, sowie die Elemente der VIII. Nebengruppe des Periodensystems der Elemente, hierfür verwendet werden können. Es wird weiter offenbart, dass die Oxide, Halogenide oder gemischte Oxide/Halogenide der vorgenannten Elemente bevorzugt verwendet werden. Insbesondere bevorzugt sind Kupferchlorid, Kupferoxid, Kaliumchlorid, Natriumchlorid, Chromoxid, Bismutoxid, Rutheniumoxid, Rutheniumchlorid, Rutheniumoxychlorid sowie Rhodiumoxid.

Gemäß der Offenbarung der WO 2007 134771 zeichnen sich diese Katalysatoren durch eine besonders hohe Aktivität für den Umsatz von Chlorwasserstoff zu Chlor aus.

In der WO 2004 052776 wird offenbart, dass es ein allgemein bekanntes Problem auf dem Gebiet der heterogen katalytischen Oxidation von Chlorwasserstoff zu Chlor sei, dass sich in den Verfahren sogenannte "Hot-Spots" bilden. Diese "Hot-Spots" bezeichnen Orte einer überproportionalen Temperaturerhöhung, die gemäß der Offenbarung der WO 2004 052776 zur Zerstörung des Katalysatormaterials führen können. Die WO 2004 052776 offenbart als Lösungsansatz zu diesem technischen Problem die Ausführung eines gekühlten Verfahrens in Rohrbündeln.

Die technische Lösung, die in der WO 2004 052776 offenbart wird, umfasst das Kühlen der Kontaktrohre. Die alternative technische Lösung, die in der WO 2007 134771 offenbart wird, umfasst das mehrstufig adiabate Ausführen des Verfahrens mit Kühlung zwischen den Stufen.

Beide technische Lösungen sind verfahrenstechnisch und apparativ aufwändig und daher mindestens wirtschaftlich unvorteilhaft, da in jedem Fall die Investitionskosten in die Apparate entweder aufgrund einer komplizierten Ausführungsform im Falle der WO 2004 052776 oder aufgrund einer mehrfachen Ausführung einfacherer Ausführungsform im Falle der WO 2007 134771 beträchtlich sind. Hinzu kommt in beiden Fällen der technisch unvorteilhafte Effekt, dass unter Verwendung der dort offenbarten Katalysatoren im Störfall eine Zerstörung derselben nicht auszuschließen ist.

Weiter offenbaren beide der vorgenannten Druckschriften keine Eigenschaften des Katalysators hinsichtlich der Porengrößenverteilung.

Eine weitere Alternative zur apparativ aufwändigen Lösung der oben genannten Probleme in Bezug auf die Katalysatoren, offenbart die EP 1 170 250. Gemäß der Offenbarung der EP 1 170 250 wird den zu hohen Temperaturen im Bereich der Reaktionszonen entgegengewirkt, indem an den Reaktionsverlauf angepasste Katalysatorschüttungen mit verminderter Aktivität des Katalysators verwendet werden. Solche angepasste Katalysatorschüttungen werden beispielsweise erzielt, indem die Katalysatorschüttungen mit Inertmaterial "verdünnt" werden oder indem einfach Reaktionszonen mit geringerem Anteil an Katalysator geschaffen werden.

Das in der EP 170 250 offenbarte Verfahren ist jedoch nachteilig, da durch eine solche "Verdünnung" Reaktionszonen mit einer gewünscht niedrigen Raum-Zeit-Ausbeute geschaffen werden. Dies geht aber zu Lasten des wirtschaftlichen Betriebs des Verfahrens, da die Reaktionszonen, die insbesondere zu Beginn des Verfahrens stark mit Inertmaterial verdünnt sind, zunächst auf die Betriebstemperaturen erwärmt werden müssen. Hierzu wird Energie aufgewendet, um das eigentlich zur Durchführung der Reaktion nicht benötigte Inertmaterial mit zu erwärmen. Nicht zuletzt ist auch gemäß der Offenbarung der EP 1 170 250 eine Zerstörung der Katalysatoren im Störfall nicht auszuschließen.

Auch die EP 1 170 250 offenbart keine Eigenschaften des Katalysatormaterials hinsichtlich seiner Porengrößenverteilung.

In der DE 1 078 100 wird offenbart, dass auch Katalysatoren umfassend Uran für die heterogen katalytische Oxidation von Chlorwasserstoff zu Chlor verwendbar sind. Die DE 1 078 100 offenbart weiter, dass solche Katalysatoren auch bei höheren Temperaturen bis zu 480°C ohne Gefahr der Zerstörung verwendbar sind. Die in der DE 1 078 100 offenbarten Katalysatoren umfassen Trägermaterialien wie Kaolin, Kieselgel, Kieselgur, Bimsstein u.a.. In der DE 1 078 100 werden die Katalysatoren durch Aufbringen des Urans aus der Lösung auf den Träger hergestellt. Es wird nicht offenbart, dass die Katalysatoren durch Fällung erhalten werden können. Weiter umfassen die offenbarten Katalysatoren keine Uranate umfassend Natrium und Uran.

Der maximal erreichbare Umsatz der in der DE 1 078 100 mit den Katalysatoren erreicht werden kann beträgt 62%, was gemessen an den gemäß der zuvor dargelegten Offenbarungen möglichen Umsätze gering und damit nachteilig ist. Dies gilt insbesondere, da in dem konkreten Ausführungsbeispiel, in dem besagte 62% Umsatz erzielt werden, 600 cm$^3$ des Reaktors mit dem Katalysator gefüllt sind. Das wiederum bedeutet, dass bei den weiteren Angaben die Aktivität des Katalysators recht gering zu sein scheint.

Die DE 1 078 100 offenbart auch keine Eigenschaften des Katalysatormaterials oder des verwendeten Trägermaterials aus Kaolin, Kieselgel, Kieselgur oder Bimsstein hinsichtlich der Porengrößenverteilung.

In der Patentschrift mit der internationalen Anmeldenummer PCT/EP2008/005183 werden Uranoxidkatalysatoren offenbart, die in einer bevorzugten Weiterentwicklung nur aus Uranoxid bestehen, oder die im allgemeinen Fall aus einem Träger aus Uranoxid und einer weiteren katalytischen Komponente bestehen.

Es wird weiter offenbart, dass sich als mit dem Uranoxid kombinierbare Trägermaterialen beispielsweise Siliziumdioxid, Titandioxid mit Rutil- oder Anatas-Struktur, Zirkondioxid, Aluminiumoxid oder deren Gemische eignen.

Die vorgenannten weiteren katalytisch aktiven Komponenten gemäß der PCT/EP2008/005183 können etwa die bereits in der WO 2007 134771 offenbarten Stoffe sein.

Die Katalysatoren umfassend den Träger aus Uranoxid und eine weitere katalytisch aktive Komponente können gemäß der PCT/EP2008/005183 durch Imprägnieren der weiteren katalytisch aktiven Komponente auf den Träger aus Uranoxid erhalten werden.

Die in der PCT/EP2008/005183 offenbarten Katalysatoren werden als besonders stabil offenbart, so dass diese vorteilhaft gegenüber den Katalysatoren, die gemäß den Offenbarungen der WO 2004 052776, WO 2007 134771 und EP 1 170 250 verwendet werden, sind. Die Katalysatoren weisen recht hohe Produktivitäten bei Temperaturen von 540°C und 600°C gemäß der Ausführungsbeispiele der PCT/EP2008/005183 auf. Allerdings bleiben diese immer noch hinter den möglichen Produktivitäten, wie sie etwa mit anderen Katalysatoren gemäß den Offenbarungen der WO 2004 052776, WO 2007 134771 und EP 1 170 250 bei niedrigeren Temperaturen zu erreichen wären, zurück. Es wurde also zu Gunsten der Stabilität auf eine gewisse Aktivität der Katalysatoren für die heterogen katalytische Oxidation von Chlorwasserstoff zu Chlor verzichtet, was nachteilig ist.

In der PCT/EP2008/005183 wird auch nicht offenbart, dass die Katalysatoren eine bestimmte Porengrößenverteilung aufweisen.

Eine weitere Verbesserung der Aktivität von Katalysatormaterialien ähnlich zu jenen der PCT/EP2008/005183, wird in der deutschen Anmeldung mit dem Aktenzeichen DE 10 2008 050978.7 offenbart.

Gemäß der Offenbarung der DE 10 2008 050978.7 wird diese Verbesserung erzielt durch die überraschende Erkenntnis, dass Uranate als Ausführungsform von Uranverbindungen, wie sie allgemein gemäß der PCT/EP2008/005183 offenbart wurden, eine Steigerung der Aktivität zur heterogen katalytischen Oxidation von Chlorwasserstoff mit Sauerstoff zu Chlor zur Folge haben.

Auch in der DE 10 2008 050978.7 wird nicht offenbart, welche Porengrößenverteilung die offenbarten Katalysatoren haben, oder dass diese einen Einfluss auf die Aktivität des Katalysators haben können. Auch wenn die Katalysatoren gemäß der DE 10 2008 050978.7 eine gegenüber der PCT/EP2008/005183 gesteigerte Aktivität zur heterogen katalytischen Oxidation von Chlorwasserstoff mit Sauerstoff zu Chlor aufweisen, so bleiben diese Aktivitäten immer noch hinter jener etwa der Katalysatoren gemäß der WO 2004 052776, WO 2007 134771 und EP 1 170 250 zurück, die aber wie bereits beschrieben den Nachteil der niedrigen Temperaturbeständigkeit aufweisen.

Ausgehend vom Stand der Technik besteht also nach wie vor die Notwendigkeit einen Katalysator zur heterogen katalytischen Oxidation von Chlorwasserstoff mit Sauerstoff zu Chlor zur Verfügung zu stellen, der in einem höheren Temperaturbereich, ohne die Gefahr der nachhaltigen Schädigung, verwendet werden kann und der gegenüber den anderen in diesen Temperaturbereichen verwendbaren Katalysatoren eine erhöhte Aktivität aufweist.

Es wurde nun überraschend gefunden, dass ein Katalysator zur heterogen katalytischen Oxidation von Chlorwasserstoff zu Chlor umfassend mindestens eine katalytisch aktive Komponente aus einer Uranverbindung und ein Trägermaterial aus Aluminiumoxid, dadurch gekennzeichnet, dass der Katalysator eine bimodale Porengrößenverteilung mit einem ersten Bereich kleinerer Porendurchmesser von 1 bis 20 nm und einem zweiten Bereich größerer Porendurchmesser von 100 bis 5.000 nm aufweist, wobei der Anteil der Porenvolumina im Bereich der kleineren Porendurchmesser von 40% bis 60 % und der Anteil der Porenvolumina im Bereich der größeren Porendurchmesser von 60% bis 40% beträgt und wobei die Summe der Anteile kleiner oder gleich 100% ist, diese Aufgabe lösen kann.

Die im Zusammenhang mit der vorliegenden Erfindung verwendbaren Uranverbindungen sind jene, wie sie bereits im Zusammenhang mit der PCT/EP2008/005183 oder der DE 10 2008 050978.7 als mögliche Uranverbindungen offenbart worden sind.

Demzufolge kann die Uranverbindung gemäß der vorliegenden Erfindung ein Uranoxid sein. Solche Uranoxide sind etwa $UO_3$, $UO_2$, $UO$ bzw. die aus Gemischen dieser Spezies resultierenden nichtstöchimoetrischen Phasen wie bspw. $U_3O_5$, $U_2O_5$, $U_3O_7$, $U_3O_8$, $U_4O_9$,

$U_{13}O_{34}$. Bevorzugte Uranoxide sind solche mit einer stöchiometrischen Zusammensetzung von $UO_{2,1}$ bis $UO_{2,9}$.

Weiter kann die Uranverbindung gemäß der vorliegenden Erfindung ein Uranat sein. Solche Uranate sind Stoffe enthaltend Uran und Sauerstoff in jeder stöchiometrischen oder nichtstöchiometrischen Zusammensetzung, die negative Ladungen aufweisen.

Bevorzugt sind Uranate negativ geladene Stoffe mit einer Zusammensetzug von $UO_x$, wobei X eine reelle Zahl größer 1 aber kleiner oder gleich 5 ist.

Die Uranate der vorliegenden Erfindung enthalten üblicherweise mindestens ein Alkali- und/oder Erdalkalimetall. Alkali- und/oder Erdalkalimetall bezeichnet im Zusammenhang mit der vorliegenden Erfindung jeden Stoff der ersten oder zweiten Hauptgruppe des Periodensystems der Elemente.

Bevorzugte Alkali- und/oder Erdalkalimetalle sind jene ausgewählt aus der Liste enthaltend Barium, Calcium, Cäsium, Kalium, Lithium, Magnesium, Natrium, Rubidium und Strontium.

Besonders bevorzugt sind jene ausgewählt aus der Liste enthaltend Barium, Calcium, Kalium, Magnesium und Natrium.

Die Uranate des mindestens einen Alkali- und/oder Erdalkalimetalls haben üblicherweise eine allgemeine Zusammensetzung $[M^q]_{2m/q}[U_nO_{3n+m}]$ mit n = 1, 2, 3, 6, 7, 13, 16 und m = 1, 2 oder 3 und q = 1 oder 2. Hierbei repräsentiert q die Anzahl positiver Ladungen, die das Alkali- oder Erdalkalimetall aufweist.

Bevorzugte Uranate von Alkali- oder Erdalkalimetallen sind $Na_6U_7O_{24}$ oder $Ba_3U_7O_{24}$.

Besonders bevorzugt ist das Natriumuranat $Na_6U_7O_{24}$.

Die vorgenannten Uranate weisen eine genauso hohe Stabilität auf, wie diese bereits in der PCT/EP2008/005183 offenbart wurden, zeigen aber zugleich eine drastisch gesteigerte Aktivität für die heterogen katalytische Oxidation von Chlorwasserstoff mit Sauerstoff zu Chlor.

In einer bevorzugten Ausführungsform umfasst der hier offenbarte Katalysator neben dem Uranat auch noch Uranoxid.

In anderen alternativen Ausführungsformen umfasst der Katalysator neben dem Uranat mindestens eines Alkali- und/oder Erdalkalimetalls auch noch Salze und/oder Oxide von Alkali- und/oder Erdalkalimetallen.

Der erfindungsgemäße Katalysator ist gegenüber dem Stand der Technik insbesondere vorteilhaft, da er die vorgenannte bimodale Porengrößenverteilung aufweist.

Bimodale Porengrößenverteilung bezeichnet im Zusammenhang mit der vorliegenden Erfindung die Tatsache, dass der erfindungsgemäße Katalysator bei Analyse mittels Quecksilberporosimetrie, wie sie dem Fachmann allgemein bekannt ist, ein erstes Porenvolumen assoziiert mit Porengrößen eines mittleren Durchmessers in einem ersten Bereich und ein zweites Porenvolumen assoziiert mit Porengrößen eines mittleren Durchmessers in einem zweiten Bereich aufweist, wobei weiter die beiden vorgenannten Bereiche der Porengrößen nicht miteinander überlappen.

Aus der vorgenannten bimodalen Porengrößenverteilung resultiert, dass die Poren im Bereich des größeren Durchmessers es ermöglichen die Verteilung im Katalysator zu verbessern, was zu einem schnelleren Antransport der Reaktanden an die heterogen katalytischen Zentren des Katalysators und zu einem schnelleren Abtransport der Reaktionsprodukte von den heterogen katalytischen Zentren des Katalysators führt. Weiter führen die Poren im Bereich des kleineren Durchmessers zu einer gleichzeitigen Erhöhung der spezifischen Oberfläche des Katalysators, was zu einer höheren Umsatzrate je eingesetztem Katalysatorvolumen oder je verwendeter Katalysatormasse führt.

Die Kombination der Porengrößen der beiden vorgenannten Bereiche im Sinne einer bimodalen Verteilung führt dazu, dass eine hohe spezifische Oberfläche des Katalysators schnell für die Reaktion einzelner Reaktanden an den heterogen katalytischen Zentren des Katalysators zur Verfügung steht bzw. nach Reaktion schnell wieder verfügbar ist, so dass insgesamt eine besonders hohe Aktivität des erfindungsgemäßen Katalysators resultiert.

Der erfindungsgemäße Katalysator weist also mindestens zwei Bereiche von Porengrößen auf. Einen ersten Bereich für kleinere Durchmesser und einen zweiten für größere Durchmesser.

Die vorgenannten Bereiche der Porengrößen liegen im Bereich von 1 bis 20 nm für den Bereich der kleineren Durchmesser und 100 bis 5000 nm für den Bereich der größeren Durchmesser; in bevorzugten Ausführungsformen des erfindungsgemäßen Katalysators im Bereich von 3 bis 15 nm für den Bereich der kleineren Durchmesser und 150 bis 2500 nm für den Bereich der größeren Durchmesser.

Da die Bereiche der mit den beiden vorgenannten Anteilen der Porenvolumina assoziierten Durchmesser erfindungsgemäß nicht überlappen, ist es auch möglich, dass die Bereiche direkt aneinander angrenzen. Wenn also gemäß möglicher einzelner Ausführungsformen einer bimodalen Porengrößenverteilung gemäß der vorliegenden Erfindung die Bereiche der Durchmesser Schnittmengen miteinander haben könnten, so bedeutet dies, dass ausgehend vom Bereich der Durchmesser der Porenvolumina mit einem kleineren Durchmesser der Bereich der Durchmesser der Porenvolumina mit einem größeren Durchmesser direkt anschließt.

In solchen Fällen kann die Summe der Anteile der Porenvolumina beider vorgenannter Bereiche 100% betragen.

Es beträgt der Anteil der Porenvolumina im Bereich der kleineren Durchmesser von 40% bis 60 %, bevorzugt etwa 50%. Zugleich beträgt der Anteil der Porenvolumina im Bereich der größeren Durchmesser ebenfalls von 60% bis 40%, bevorzugt etwa 50%, wobei die Summe der Anteile kleiner oder gleich 100% sein kann.

Insbesondere die Kombination des Anteils von Porenvolumina des Bereichs kleinerer Durchmesser mit jenen des Anteils von Porenvolumina des Bereichs größerer Durchmesser in Verbindung mit den zuvor offenbarten mittleren Durchmessern gemäß der einzelnen bevorzugten Ausführungsformen, führt zu einer besonders vorteilhaften Ausprägung des vereinfachten An- und Abtransportes der Stoffe an/von den heterogen katalytischen Zentren des Katalysators zusammen mit der besonders hohen spezifischen Oberfläche des Katalysators, so dass solche erfindungsgemäße Katalysatoren gegenüber den aus dem Stand der Technik bekannten Katalysatoren hinsichtlich ihrer Aktivität überlegen sind und zugleich durch die verwendete Uranverbindung auf einem Aluminiumoxidträger eine besonders hohe Stabilität hinsichtlich Temperatur und weiteren Verfahrensparametern, in denen diese verwendet werden, aufweisen.

Der gemäß dieser Erfindung offenbarte Katalysator kann in allen geometrischen Ausführungsformen, die für die spätere Verwendung im Zusammenhang mit Verfahren zur heterogen katalytischen Oxidation von Chlorwasserstoff mit Sauerstoff zu Chlor sinnvoll erscheinen, vorliegen.

In bevorzugten Ausführungsformen der vorliegenden Erfindung liegt der erfindungsgemäße Katalysator als Partikelschüttung vor oder als Formkörper.

Liegt der Katalysator gemäß der bevorzugten Ausführungsform der vorliegenden Erfindung als Partikelschüttung vor, so beträgt der mittlere Durchmesser der Partikel der Partikelschüttung üblicherweise von 0,5 bis 8 mm, bevorzugt von 1 bis 5 mm.

Die Obergrenzen der vorgenannten Bereiche sind besonders vorteilhaft, weil oberhalb des offenbarten mittleren Durchmessers die besondere Vorteilhaftigkeit des erfindungsgemäßen Katalysators dadurch vermindert wird, dass trotz des verbesserten An- und Abtransports der Stoffe an/von den heterogen katalytischen Zentren des Katalysators die mittlere Wegstrecke bis zu dem Anteil des erfindungsgemäßen Katalysators mit besonders hoher spezifischer Oberfläche dergestalt verlängert wird, dass ein signifikanter Anteil der Reaktanden bereits im Bereich der Porenvolumina assoziiert mit einem Bereich größerer Durchmesser reagiert, was ineffizient ist.

Die Untergrenzen der vorgenannten Bereiche sind besonders vorteilhaft, weil unterhalb des offenbarten mittleren Durchmessers die besondere Vorteilhaftigkeit des erfindungsgemäßen Katalysators dadurch vermindert wird, dass hier ein verbesserter An- und Abtransport der Stoffe an/von den heterogen katalytischen Zentren des Katalysators entbehrlich wird, weil ohnehin ein großer Anteil des Katalysators direkt mit den Reaktanden in Kontakt steht. Dies wäre ebenfalls ineffizient.

Liegt der Katalysator gemäß der bevorzugten Ausführungsform der vorliegenden Erfindung als Formkörper vor, so ist der Formkörper porös und so ausgestaltet, dass er als Agglomerat vorgenannter Partikel der Partikelschüttung zu identifizieren ist.

Im Zusammenhang mit der vorliegenden Erfindung bedeutet dies, dass die erfindungsgemäßen Formköper als Erscheinungsform des erfindungsgemäßen Katalysators durch Grenzflächen zwischen miteinander verbundenen Partikeln des erfindungsgemäßen Katalysators gekennzeichnet sind.

Die Ausführungsform als poröse Formkörper mit Grenzflächen zwischen miteinander verbundenen Partikeln des erfindungsgemäßen Katalysators ist deshalb vorteilhaft, weil somit leichter handhabbare Erscheinungsformen des erfindungsgemäßen Katalysators erhalten werden, die aber nach wie vor die vorteilhaften Eigenschaften der vorgenannten Partikel der Partikelschüttungen in den offenbarten vorteilhaften Größenbereichen aufweisen.

Der Anteil der Uranverbindung am gesamten erfindungsgemäßen Katalysator, ungeachtet seiner geometrischen Erscheinungsform, liegt üblicherweise im Bereich von 1 bis 40 Gew.%, bevorzugt im Bereich von 3 bis 25 Gew.-%.

Ein weiterer Gegenstand der vorliegenden Erfindung ist ein Verfahren zur Herstellung der erfindungsgemäßen Katalysatoren, dadurch gekennzeichnet, dass es mindestens die Schritte

a) Bereitstellen einer Lösung A umfassend ein Uransalz in einem Lösungsmittel,

b) Beschichten von Partikeln aus Aluminiumoxid mit Lösung A, erhaltend beschichtete Partikel B,

c) Trocknen der beschichteten Partikel B, und

d) gegebenenfalls Ausformen von Formkörpern aus den beschichteten Partikeln B, erhalten aus einem der Schritte b) oder c),

umfasst.

Das Uransalz der Lösung A gemäß dem Schritt a) des erfindungsgemäßen Verfahrens bezeichnet im Zusammenhang mit der vorliegenden Erfindung jede Verbindung umfassend mindestens ein Ion des Elements Uran mit mindestens einem Gegen-Ion, wobei die Gesamtheit der gegebenenfalls mehreren Gegen-Ionen insgesamt so viele entgegengesetzte Ladungen trägt, wie die Gesamtheit der gegebenenfalls enthaltenen mehreren Uran-Ionen.

Die Uran-Ionen in dem erfindungsgemäßen Uransalz können zweifach, dreifach, vierfach, fünffach oder sechsfach positiv geladen sein. Bevorzugt sind die Uran-Ionen im Uransalz vier-, fünf- oder sechsfach positiv geladen. Besonders bevorzugt sind die Uran-Ionen des Uransalzes sechsfach positiv geladen.

Bevorzugte Uransalze sind solche ausgewählt aus der Liste bestehend aus Uranylacetat $UO_2Ac_2$, Uranylacetatdihydrat $UO_2Ac_2 \cdot 2H_2O$, Uranyloxidnitrat $UO_2(NO_3)_2$, und Uranyloxidnitrathexahydrat $UO_2(NO_3)_2 \cdot 6H_2O$.

Das Lösungsmittel der Lösung A gemäß dem Schritt a) des erfindungsgemäßen Verfahrens bezeichnet im Zusammenhang mit der vorliegenden Erfindung ein Lösungsmittel ausgewählt aus der Liste bestehend aus Wasser, ein- oder mehrwertiger Alkohol mit höchstens fünf Kohlenstoffatomen und Benzol. Bevorzugt ist Wasser.

Die vorgenannten bevorzugten Uransalze sind in Verbindung mit dem bevorzugten Lösungsmittel Wasser besonders vorteilhaft, weil sie sich in wässrigen Lösungen in hohen Anteilen auflösen lassen und zugleich die Acetat- und Nitratreste üblicherweise in Wasser vollständig dissoziiert vorliegen. Außerdem sind diese Uransalze besonders vorteilhaft, weil sie bei dem Trocknen gemäß dem Schritt c), bei den bevorzugten Temperaturen in gasförmige Stickoxide, oder gasförmige Kohlenstoffoxide, wie Kohlenstoffmonoxid, oder Kohlenstoffdioxid umgesetzt werden, und somit den erhaltenen Katalysator damit nicht mehr verunreinigen können.

Die im Verfahren gemäß dem Schritt a) vorliegende Lösung A bezeichnet Lösungen, in denen alle Stoffe molekular gelöst vorliegen.

Das Beschichten gemäß dem Schritt b) des erfindungsgemäßen Verfahrens kann durch Fällen des Uransalzes aus Lösung A in Gegenwart der Partikel aus Aluminiumoxid oder durch Eintauchen der Partikel aus Aluminiumoxid in die Lösung A oder durch Besprühen der Partikel aus Aluminiumoxid mit Lösung A erfolgen. Bevorzugt ist ein Beschichten durch ein Besprühen der Partikel aus Aluminiumoxid mit der Lösung A.

Das Trocknen gemäß dem Schritt c) des erfindungsgemäßen Verfahrens kann unter Atmosphärendruck (1013 hPa) oder gegenüber Atmosphärendruck verringertem Druck erfolgen, wobei es bevorzugt ist, das Trocknen bei Atmosphärendruck auszuführen.

Gleichzeitig kann das Trocknen bei Raumtemperatur (23°C) oder bei gegenüber Raumtemperatur erhöhter Temperatur erfolgen, wobei es bevorzugt ist, das Trocknen bei gegenüber Raumtemperatur erhöhter Temperatur auszuführen.

Besonders bevorzugt ist es, das Trocknen bei Temperaturen von 500°C bis 1500°C auszuführen.

Das Trocknen kann in alternativen Ausführungsformen des Schrittes c) des erfindungsgemäßen Verfahrens auch in mehreren Stufen ausgeführt werden. Bevorzugt wird in solchen alternativen Ausführungsformen ein Vortrocknen bei Raumtemperatur bis 250°C vorgesehen und ein Nachtrocknen bei Temperaturen von 500°C bis 1500°C.

Solche Temperaturen von 500°C bis 1500°C sind besonders vorteilhaft, weil hierdurch sicher alle nach dem Beschichten auf der Oberfläche der beschichteten Partikel B vorhandenen Hydroxide und/oder Hydrate des Urans damit zu Oxiden und/oder Salzen umgewandelt werden und somit die bevorzugten Uranate und/oder Uranoxide gebildet werden.

Das erfindungsgemäße Trocknen bzw. das Nachtrocknen gemäß der alternativen Ausführungsform des erfindungsgemäßen Verfahrens bei 500°C bis 1500°C kann insofern auch unter dem, dem Fachmann allgemein bekannten Begriff des "Kalzinierens" zusammengefasst werden.

Das Ausformen von Formkörpern gemäß dem Schritt d) aus den beschichteten Partikeln B, kann aus den Partikeln B aus dem Schritt b) oder Schritt c) erfolgen.

Erfolgt das Ausformen von Formkörpern aus den beschichteten Partikeln B aus dem Schritt c) des erfindungsgemäßen Verfahrens, so geschieht dies üblicherweise durch Zugabe eines Bindemittels und nachfolgendes Trocknen, wobei bei dem Trocknen die Partikel B in eine Negativform des gewünschten Formkörpers gepresst werden.

Das vorgenannte Bindemittel ist üblicherweise eines der Lösungsmittel der Lösung A gemäß dem Schritt a) des erfindungsgemäßen Verfahrens oder ein Gel von Aluminiumoxid ($Al_2O_3$) oder Siliziumdioxid ($SiO_2$) in Wasser. Bevorzugt ist das Bindemittel Wasser.

Das Trocknen erfolgt üblicherweise bei den Temperaturen, wie sie für das Trocknen gemäß dem Schritt c) des-erfindungsgemäßen Verfahrens für ein Vortrocknen offenbart worden sind, wobei aber der Druck unter dem dieses Trocknen ausgeführt wird gegenüber dem Atmosphärendruck erhöht ist und wobei dieser Druck durch Zusammenpressen der vorgenannten Negativform um die Partikel B, mit denen die Negativform befüllt wurde, erhalten wird.

Erfolgt das Ausformen von Formkörpern aus den beschichteten Partikeln B aus dem Schritt b) des erfindungsgemäßen Verfahrens, so geschieht dies üblicherweise durch Trocknen bei den Temperaturen, wie sie für das Trocknen gemäß dem Schritt c) des erfindungsgemäßen Verfahrens für ein Vortrocknen offenbart worden sind, wobei aber der Druck unter dem dieses Trocknen ausgeführt wird, gegenüber dem Atmosphärendruck erhöht ist und wobei dieser Druck durch Zusammenpressen der vorgenannten Negativform um die Partikel B, mit denen die Negativform befüllt wurde, erhalten wird.

Ein weiterer Gegenstand der vorliegenden Erfindung sind Verfahren zur Herstellung von Chlor, dadurch gekennzeichnet, dass in einer Reaktionszone Chlorwasserstoff in Gegenwart eines Katalysators mit bimodaler Porengrößenverteilung mit einem ersten Bereich kleinerer Porendurchmesser von 1 bis 20 nm und einem zweiten Bereich größerer Porendurchmesser von 100 bis 5.000 nm und umfassend mindestens eine katalytisch aktive Komponente aus einer Uranverbindung und ein Trägermaterial aus Aluminiumoxid mit Sauerstoff zu Chlor oxidiert wird.

Solche Verfahren werden bevorzugt bei Temperaturen oberhalb von 400°C in einer Reaktionszone betrieben.

Dem Fachmann ist allgemein bekannt, dass die Reaktionsgeschwindigkeit einer chemischen Reaktion im Allgemeinen mit der Temperatur, bei der diese ausgeführt wird, steigt. Somit sind die hier offenbarten erfindungsgemäßen Verfahren zur Oxidation von Chlorwasserstoff zu Chlor besonders vorteilhaft, weil damit erstmalig die erhöhten Reaktionsgeschwindigkeiten für die technische Produktion von Chlor aus Chlorwasserstoff erreicht werden können, ohne dass die Katalysatoren hierdurch zerstört würden. Zugleich ermöglicht die bimodale Porengrößenverteilung eine maximale Ausnutzung des Katalysatormaterials im Sinne einer Aktivität je eingesetzter Katalysatormasse und/oder je Katalysatorvolumen.

Ein weiterer Gegenstand der vorliegenden Erfindung ist daher die Verwendung der zuvor offenbarten Ausführungsformen der erfindungsgemäßen und bevorzugten Katalysatoren für die Oxidation von Chlorwasserstoff zu Chlor.

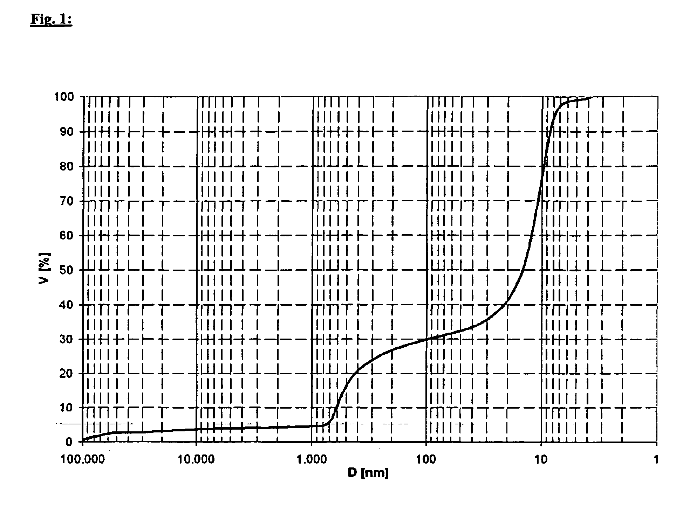

Fig. 1 zeigt die erfindungsgemäße, bimodale Porengrößenverteilung der kugelförmigen gamma-$Al_2O_3$ Formkörper gemäß dem Beispiel 1. Dargestellt sind der Anteil der Porenvolumina (V) bezogen auf die jeweilige Porendurchmesser (D) in Nanometer [nm]. Klar erkenntlich sind die Wendepunkte und somit wesentlichen Porenanteile der Porendurchmesserverteilung bei D ~500 nm, sowie D ~ 10 nm.

Im Folgenden wird die Erfindung anhand von Beispielen näher erläutert, ohne sie jedoch dadurch hierauf zu begrenzen.

## Beispiele

### Beispiel 1: Herstellen eines erfindungsgemäßen Katalysators

In einem Becherglas wurden 5 g kugelförmige gamma-$Al_2O_3$ Formkörper (bezogen von Fa. Saint-Gobain) eines durchschnittlichen Durchmessers von 1,5 mm, einer BET-Oberfläche von 249 m$^2$/g, eines mittleren Porendurchmessers dp von ~ 10 / 1000 nm und eines Porenvolumens von $V_{Hg,P}$ 1,35 cm$^3$/g mit einer 10 Gew-%igen wässrigen Lösung von Uranylacetatdihydrat (Fa. Riedel de Haen) durch Besprühen imprägniert.

Nach einer Einwirkzeit von 1 h wurde der Feststoff in einem Luftstrom bei 80°C für 2 h getrocknet. Der gesamte Versuch wurde so oft wiederholt, bis umgerechnet 5 Gew.-% Uran auf den Formkörpern vorhanden waren. Der komplett beladene Katalysator wird anschließend für 4 h bei 800 °C unter Luft kalziniert.

### Beispiel 2: Herstellen eines erfindungsgemäßen Katalysators

Es wurde ein Katalysator entsprechend Beispiel 1 hergestellt, wobei der Imprägnier-/Trocknungsschritt so oft wiederholt wurde, bis man einen Katalysator mit einer rechnerischen Uranbeladung von 10 Gew.-% erhielt.

### Beispiel 3: Herstellen eines erfindungsgemäßen Katalysators

Es wurde ein Katalysator entsprechend Beispiel 1 hergestellt, wobei der Imprägnier-/Trocknungsschritt so oft wiederholt wurde, bis man einen Katalysator mit einer rechnerischen Uranbeladung von 15 Gew.-% erhielt.

### Beispiel 4: Herstellen eines erfindungsgemäßen Katalysators

Es wurde ein Katalysator entsprechend Beispiel 1 hergestellt, wobei jedoch 5 g kugelförmige gamma-$Al_2O_3$ Formkörper (hergestellt durch Saint-Gobain) mit einem durchschnittlichen Durchmesser von 1,5 mm, einer BET von 250 m$^2$/g, einem mittleren Porendurchmesser $d_P$ von ~ 7 / 500 nm und einem Porenvolumen von $V_{Hg,P}$ 1,05 cm$^3$/g eingesetzt wurden. Die genaue Porengrößenverteilung der kugelförmigen gamma-$Al_2O_3$ Formkörper ist in Fig. 1 dargestellt.

Der Vollständigkeit halber und zur Klarstellung sei hier darauf hingewiesen, dass die Notation mittleren Porendurchmesser in diesem Beispiel 4, als auch im vorstehenden Beispiel 1 jeweils jene beiden mittleren Porengrößen $d_p$ der bimodalen Porengrößenverteilung, getrennt durch "/", angibt, die den jeweils größten Anteil am Porenvolumen der Porenvolumina im Bereich des kleineren Porendurchmessers bzw. im Bereich des größeren Porendurchmessers haben. Somit bedeutet dP ~ 7/500, dass die Porenvolumina im Bereich des kleineren Porendurchmessers dominiert werden von Poren mit einem Durchmesser von ~ 7 nm und die Porenvolumina im Bereich des größeren Porendurchmessers dominiert werden von Poren mit einem Durchmesser von ~ 500 nm. Entsprechendes gilt bzgl. des Beispiels 1.

**Beispiel 5: Herstellen eines erfindungsgemäßen Katalysators**

Es wurde ein Katalysator entsprechend Beispiel 4 hergestellt, wobei der Imprägnier-/Trocknungsschritt so oft wiederholt wurde, bis man einen Katalysator mit einer rechnerischen Uranbeladung von 10 Gew.-% erhielt.

**Beispiel 6: Herstellen eines erfindungsgemäßen Katalysators**

Es wurde ein Katalysator entsprechend Beispiel 4 hergestellt, wobei der Imprägnier-/Trocknungsschritt so oft wiederholt wurde, bis man einen Katalysator mit einer rechnerischen Uranbeladung von 15 Gew.-% erhielt.

**Beispiel 7: Herstellen eines erfindungsgemäßen Katalysators**

Es wurde ein Katalysator entsprechend Beispiel 4 hergestellt, wobei der Imprägnier-/Trocknungsschritt so oft wiederholt wurde, bis man einen Katalysator mit einer rechnerischen Uranbeladung von 20 Gew.-% erhielt.

**Gegenbeispiel 1: Herstellen eines nicht erfindungsgemäßen Katalysators**

Es wurde ein Katalysator entsprechend Beispiel 1 hergestellt, wobei jedoch 5 g kugelförmige gamma-$Al_2O_3$ Formkörper (hergestellt durch Saint-Gobain) mit einem durchschnittlichen Durchmesser von 1,5 mm, einer BET von 260 $m^2$/g, einem mittleren Porendurchmesser $d_P$ von 10 nm und einem Porenvolumen von $V_{Hg,P}$ 0,83 $cm^3$/g eingesetzt wurden und der Imprägnier-/Troclrnungsschritt so oft wiederholt wurde, bis ein Katalysator mit einer rechnerischen Uranbeladung von 4,8 Gew.-% erhalten wurde.

**Gegenbeispiel 2: Herstellen eines nicht erfindungsgemäßen Katalysators**

Es wurde ein Katalysator entsprechend Gegenbeispiel 1 hergestellt, wobei der Imprägnier-/Trocknungsschritt so oft wiederholt wurde, bis man einen Katalysator mit einer rechnerischen Uranbeladung von 8,8 Gew.-% erhielt.

**Gegenbeispiel 3: Herstellen eines nicht erfindungsgemäßen Katalysators**

Es wurde ein Katalysator entsprechend Gegenbeispiel 1 hergestellt, wobei der Imprägnier-/Trocknungsschritt so oft wiederholt wurde, bis man einen Katalysator mit einer rechnerischen Uranbeladung von 12,2 Gew.-% erhielt.

**Gegenbeispiel 4: Herstellen eines nicht erfindungsgemäßen Katalysators**

Es wurde ein Katalysator entsprechend Gegenbeispiel 3 hergestellt, wobei jedoch 5 g kugelförmige gamma-$Al_2O_3$ Formkörper (hergestellt durch Saint-Gobain) mit einem durchschnittlichen Durchmesser von 1,5 mm, einer BET von 200 $m^2$/g, einem mittleren Porendurchmesser $d_P$ von 9 nm und einem Porenvolumen von $V_{Hg,P}$ 0,55 $cm^3$/g eingesetzt wurden.

**Beispiele 8-14: Verwendung der Katalysatoren aus den Beispielen 1-7 für die heterogen katalytische Oxidation von Chlorwasserstoff zu Chlor bei 500°C**

0,2 g der gemäß Beispiel 1 bis 3 erhaltenen Stoffe wurden händisch in einem Mörser gemahlen und als Gemisch mit 1 g Quarzsand (100-200 μm) in ein Quarzreaktionsrohr (Durchmesser ~ 10 mm) eingebracht.
Das Quarzreaktionsrohr wurde auf 500°C erwärmt und im Folgenden bei dieser Temperatur betrieben.
Es wurde ein Gasgemisch aus 80 ml/min Chlorwasserstoff und 80 ml/min Sauerstoff durch das Quarzreaktionsrohr geleitet.
Nach 30 Minuten wurde der Produktgasstrom für 10 Minuten in eine 16 Gew.-%ige Kaliumiodidlösung geleitet und das entstandende Iod mit einer 0,1 N Thiosulfatlösung zurücktitriert, um die eingeleitete Chlormenge zu ermitteln.
Hieraus wurden die in Tabelle 1 gezeigten Aktivitäten der Katalysatoren gemäß der Beispiele 1 bis 7 bei 500°C berechnet.

Die Aktivität wurde in allen Fällen gemäß der allgemeinen Formel $\dfrac{m_{Cl_2, \text{bei Titration ermittelt}}}{m_{Katalysator} \cdot t_{Messzeit}}$ errechnet.

**Gegenbeispiele 5-8: Verwendung der Katalysatoren aus den Gegenbeispielen 1-4 für die heterogen katalytische Oxidation von Chlorwasserstoff zu Chlor bei 500°C**

Die katalytische Aktivität der Katalysatoren gemäß den Gegenbeispielen 1-4 wurde entsprechend der Testung der erfindungsgemäßen Katalysatoren gemessen. Die daraus resultierenden Aktivitäten sind auch in Tabelle 1 dargestellt.

**Tabelle 1: Ergebnisse der Beispiele 8 bis 14 für die Katalysatoren gemäß den Beispielen 1 bis 7 bzw. die Ergebnisse der Gegenbeispiele 5-8 für die Katalysatoren gemäß den Gegenbeispielen 1 bis 4**

| Beispiel | Katalysator gemäß | Aktivitäten bei 500 °C [$kg_{C12}/kg_{Kat} \cdot$ h] | Gegenbeispiel | Katalysator gemäß | Aktivitäten bei 500 °C [$kg_{C12}/kg_{Kat} \cdot$ h] |
|---|---|---|---|---|---|
| 8 | Beispiel 1 | 3,69 | 5 | Gegenbeispiel 1 | 2,45 |
| 9 | Beispiel 2 | 6,48 | 6 | Gegenbeispiel 2 | 3,48 |
| 10 | Beispiel 3 | 7,09 | 7 | Gegenbeispiel 3 | 3,53 |
| 11 | Beispiel 4 | 4,37 | 8 | Gegenbeispiel 4 | 4,39 |
| 12 | Beispiel 5 | 6,73 | | | |
| 13 | Beispiel 6 | 7,02 | | | |
| 14 | Beispiel 7 | 7,60 | | | |

Aus der Tabelle 1 geht hervor, dass die erfindungsgemäßen Katalysatoren gemäß den Beispielen 1-7 eine deutlich höhere Aktivität für die heterogen katalytische Oxidation von Chlorwasserstoff zu Chlor aufweisen, als die Katalysatoren gemäß den Gegenbeispielen 1-4 (wie sie ähnlich aus dem Stand der Technik etwa gemäß der PCT/EP2008/005183 erhalten werden).

**Patentansprüche**

1. Katalysator zur heterogen katalytischen Oxidation von Chlorwasserstoff zu Chlor umfassend mindestens eine katalytisch aktive Komponente aus einer Uranverbindung und ein Trägermaterial aus Aluminiumoxid, **dadurch gekennzeichnet, dass** der Katalysator eine bimodale Porengrößenverteilung mit einem ersten Bereich kleinerer Porendurchmesser von 1 bis 20 nm und einem zweiten Bereich größerer Porendurchmesser von 100 bis 5.000 nm aufweist, wobei der Anteil der Porenvolumina im Bereich der kleineren Porendurchmesser von 40% bis 60 % und der Anteil der Porenvolumina im Bereich der größeren Porendurchmesser von 60% bis 40% beträgt und wobei die Summe der Anteile kleiner oder gleich 100% ist.

2. Katalysator nach Anspruch 1, **dadurch gekennzeichnet, dass** die Uranverbindung ein Uranoxid mit einer stöchiometrischen Zusammensetzung von $UO_{2,1}$ bis $UO_{2,9}$ ist.

3. Katalysator nach Anspruch 1, **dadurch gekennzeichnet, dass** die Uranverbindung ein Uranat mindestens eines Alkali- und/oder Erdalkalimetalls ist.

4. Katalysator nach einem der vorstehenden Ansprüche, **dadurch gekennzeichnet, dass** der Anteil der Uranverbindung am gesamten Katalysator im Bereich von 1 bis 40 Gew.-% liegt.

5. Verfahren zur Herstellung eines Katalysators nach einem der vorstehenden Ansprüche für die heterogen katalytische Oxidation von Chlorwasserstoff zu Chlor, **dadurch gekennzeichnet, dass** es mindestens die Schritte

a. Bereitstellen einer Lösung A umfassend ein Uransalz in einem Lösungsmittel,

b. Beschichten von Partikeln aus Aluminiumoxid mit Lösung A, erhaltend beschichtete Partikel B,

c. Trocknen der beschichteten Partikel B, und

d. gegebenenfalls Ausformen von Formkörpern aus den beschichteten Partikeln B, erhalten aus einem der Schritte b) oder c),

umfasst.

6. Verfahren nach Anspruch 5, **dadurch gekennzeichnet, dass** das Uransalz ausgewählt ist aus der Liste bestehend aus Uranylacetat $UO_2Ac_2$, Uranylacetatdihydrat $UO_2Ac_2 \cdot 2H_2O$, Uranyloxidnitrat $UO_2(NO_3)_2$, und Uranyloxidnitrathexahydrat $UO_2(NO_3)_2 \cdot 6H2O$.

7. Verfahren nach einem der Ansprüche 5 oder 6, **dadurch gekennzeichnet, dass** ein Ausformen gemäß dem Schritt d) ausgeführt wird, bei dem die Partikel B aus dem Schritt c) durch Zugabe eines Bindemittels und durch nachfolgendes Trocknen zu Formkörpern ausgeformt werden, wobei bei dem Trocknen die Partikel B in eine Negativform des gewünschten Formkörpers gepresst werden.

8. Verfahren nach einem der Ansprüche 5 oder 6, **dadurch gekennzeichnet, dass** die beschichteten Partikel B aus dem Schritt b) einem Trocknen unter gegenüber dem Atmosphärendruck erhöhtem Druck zugeführt werden und wobei dieser Druck durch Zusammenpressen einer Negativform des gewünschten Formkörpers um die Partikel B, mit denen die Negativform befüllt wurde, erhalten wird.

9. Verfahren nach einem der Ansprüche 5 bis 8, **dadurch gekennzeichnet, dass** das Trocknen bei Temperaturen von 500°C bis 1500°C ausgeführt wird.

10. Verfahren nach einem der Ansprüche 5 bis 8, **dadurch gekennzeichnet, dass** das Trocknen in mehreren Stufen ausgeführt wird, wobei in einer ersten Stufe ein Vortrocknen bei Raumtemperatur bis 250°C ausgeführt wird und in einer zweiten Stufe ein Nachtrocknen bei Temperaturen von 500°C bis 1500°C ausgeführt wird.

11. Verfahren zur Herstellung von Chlor, **dadurch gekennzeichnet, dass** in einer Reaktionszone Chlorwasserstoff in Gegenwart eines Katalysators mit bimodaler Porengrößenverteilung mit einem ersten Bereich kleinerer Porendurchmesser von 1 bis 20 nm und einem zweiten Bereich größerer Porendurchmesser von 100 bis 5.000 nm und umfassend mindestens eine katalytisch aktive Komponente aus einer Uranverbindung und ein Trägermaterial aus Aluminiumoxid mit Sauerstoff zu Chlor oxidiert wird.

12. Verwendung eines Katalysators umfassend mindestens eine katalytisch aktive Komponente aus einer Uranverbindung und ein Trägermaterial aus Aluminiumoxid und mit bimodaler Porengrößenverteilung mit einem ersten Bereich kleinerer Porendurchmesser von 1 bis 20 nm und einen zweiten Bereich größerer Porendurchmesser von 100 bis 5.000 nm zur Oxidation von Chlorwasserstoff zu Chlor.

**Claims**

1. Catalyst for heterogeneously catalytic oxidation of hydrogen chloride to chlorine, comprising at least one catalytically active component composed of a uranium compound and a support material composed of aluminium oxide, **characterized in that** the catalyst has a bimodal pore size distribution with a first range of smaller pore diameter from 1 to 20 nm and a second range of greater pore diameter from 100 to 5000 nm, the proportion of pore volumes in the range of the smaller pore diameter being from 40% to 60% and the proportion of pore volumes in the range of the greater pore diameter being from 60% to 40%, and the sum of the proportions being less than or equal to 100%.

2. Catalyst according to Claim 1, **characterized in that** the uranium compound is a uranium oxide with a stoichiometric composition of $UO_{2.1}$ to $UO_{2.9}$.

3. Catalyst according to Claim 1, **characterized in that** the uranium compound is a uranate of at least one alkali metal and/or alkaline earth metal.

4. Catalyst according to any of the preceding claims, **characterized in that** the proportion of the uranium compound in the overall catalyst is in the range from 1 to 40% by weight.

**5.** Process for preparing a catalyst according to any of the preceding claims for the heterogeneously catalytic oxidation of hydrogen chloride to chlorine, **characterized in that** it comprises at least the steps of

> a. providing a solution A comprising a uranium salt in a solvent,
> b. coating particles of aluminium oxide with solution A to obtain coated particles B,
> c. drying the coated particles B, and
> d. optionally shaping shaped bodies from the coated particles B obtained from one of steps b) and c).

**6.** Process according to Claim 5, **characterized in that** the uranium salt is selected from the list consisting of uranyl acetate $UO_2Ac_2$, uranyl acetate dihydrate $UO_2Ac_2 . 2H_2O$, uranyl oxide nitrate $UO_2(NO_3)_2$, and uranyl oxide nitrate hexahydrate $UO_2(NO_3)_2 . 6H_2O$.

**7.** Process according to either of Claims 5 and 6, **characterized in that** shaping according to step d) is performed, in which the particles B from step c) are shaped to shaped bodies by adding a binder and by subsequent drying, in the course of which drying step the particles B are pressed into a negative mould of the desired shaped body.

**8.** Process according to either of Claims 5 and 6, **characterized in that** the coated particles B from step b) are sent to drying under elevated pressure relative to atmospheric pressure, this pressure being obtained by compressing a negative mould of the desired shaped body around the particles B with which the negative mould has been filled.

**9.** Process according to any of Claims 5 to 8, **characterized in that** the drying is performed at temperatures of 500°C to 1500°C.

**10.** Process according to any of Claims 5 to 8, **characterized in that** the drying is performed in a plurality of stages, a first stage involving preliminary drying at room temperature to 250°C and a second stage further drying at temperatures of 500°C to 1500°C.

**11.** Process for preparing chlorine, **characterized in that** hydrogen chloride is oxidized with oxygen to chlorine in a reaction zone in the presence of a catalyst with bimodal pore size distribution with a first range of smaller pore diameter from 1 to 20 nm and a second range of greater pore diameter from 100 to 5000 nm and comprising at least one catalytically active component composed of a uranium compound and a support material composed of aluminium oxide.

**12.** Use of a catalyst comprising at least one catalytically active component composed of a uranium compound and a support material composed of aluminium oxide and having bimodal pore size distribution with a first range of smaller pore diameter from 1 to 20 nm and a second range of greater pore diameter from 100 to 5000 nm for oxidizing hydrogen chloride to chlorine

**Revendications**

**1.** Catalyseur pour l'oxydation catalytique hétérogène de chlorure d'hydrogène en chlore, comprenant au moins un composant catalytiquement actif à base d'un composé d'uranium et une matière de support à base d'oxyde d'aluminium, **caractérisé en ce que** le catalyseur présente une distribution bimodale de tailles de pores comportant une première zone de plus petits diamètres de pores de 1 à 20 nm et une deuxième zone de plus grands diamètres de pores de 100 à 5 000 nm, la proportion des volumes de pores dans la zone des plus petits diamètres de pores étant de 40 % à 60 % et la proportion des volumes de pores dans la zone des plus grands diamètres de pores étant de 60 % à 40 % et la somme des proportions étant inférieure ou égale à 100 %.

**2.** Catalyseur selon la revendication 1, **caractérisé en ce que** le composé d'uranium est un oxyde d'uranium ayant une composition stoechiométrique de $UO_{2,1}$ à $UO_{2,9}$.

**3.** Catalyseur selon la revendication 1, **caractérisé en ce que** le composé d'uranium est un uranate d'au moins un métal alcalin et/ou alcalino-terreux.

**4.** Catalyseur selon l'une quelconque des revendications précédentes, **caractérisé en ce que** la proportion du composé d'uranium par rapport au catalyseur dans son ensemble se situe dans la plage allant de 1 à 40 % en poids.

**5.** Procédé pour la préparation d'un catalyseur selon l'une quelconque des revendications précédentes, pour l'oxydation catalytique hétérogène de chlorure d'hydrogène en chlore, **caractérisé en ce qu'**il comprend au moins les étapes

    a. disposition d'une solution A comprenant un sel d'uranium dans un solvant,
    b. enrobage de particules d'oxyde d'aluminium avec la solution A, pour l'obtention de particules enrobées B,
    c. séchage des particules enrobées B, et
    d. éventuellement façonnage de corps moulés à partir des particules enrobées B, obtenues à partir de l'une des étapes b) ou c).

**6.** Procédé selon la revendication 5, **caractérisé en ce que** le sel d'uranium est choisi dans la liste consistant en acétate d'uranyle $UO_2Ac_2$, acétate d'uranyle dihydraté $UO_2Ac_2$ . $2H_2O$, oxynitrate d'uranyle $UO_2(NO_3)_2$ et oxynitrate d'uranyle hexahydraté $UO_2(NO_3)_2$. $6H_2O$.

**7.** Procédé selon la revendication 5 ou 6, **caractérisé en ce qu'**on effectue un façonnage selon l'étape d), dans lequel on façonne en corps moulés les particules B provenant de l'étape c) par addition d'un liant et par séchage subséquent, en pressant lors du séchage les particules B dans un moule négatif du corps moulé désiré.

**8.** Procédé selon la revendication 5 ou 6, **caractérisé en ce qu'**on envoie les particules enrobées B provenant de l'étape b) à un séchage sous une pression élevée par rapport à la pression atmosphérique et cette pression étant obtenue par serrage d'un moule négatif du corps moulé désiré autour des particules B, avec lesquelles a été rempli le moule négatif.

**9.** Procédé selon l'une quelconque des revendications 5 à 8, **caractérisé en ce que** le séchage est effectué à des températures de 500 °C à 1 500 °C.

**10.** Procédé selon l'une quelconque des revendications 5 à 8, **caractérisé en ce qu'**on effectue le séchage en plusieurs stades, en effectuant dans un premier stade un préséchage à une température dans la plage allant de la température ambiante à 250 °C et dans un deuxième stade un post-séchage à des températures de 500 °C à 1 500 °C.

**11.** Procédé pour la production du chlore, **caractérisé en ce que** dans une zone de réaction du chlorure d'hydrogène est oxydé en chlore avec de l'oxygène en présence d'un catalyseur à distribution bimodale de tailles de pores comportant une première zone de plus petits diamètres de pores de 1 à 20 nm et une deuxième zone de plus grands diamètres de pores de 100 à 5 000 nm et comprenant au moins un composant catalytiquement actif à base d'un composé d'uranium et une matière de support à base d'oxyde d'aluminium.

**12.** Utilisation d'un catalyseur comprenant au moins un composant catalytiquement actif à base d'un composé d'uranium et une matière de support à base d'oxyde d'aluminium et à distribution bimodale de tailles de pores comportant une première zone de plus petits diamètres de pores de 1 à 20 nm et une deuxième zone de plus grands diamètres de pores de 100 à 5 000 nm, pour l'oxydation de chlorure d'hydrogène en chlore.

**Fig. 1:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007134771 A
- WO 2004052776 A
- EP 1170250 A
- EP 170250 A
- DE 1078100
- EP 2008005183 W
- DE 102008050978